# EUROPÄISCHE PATENTSCHRIFT

(11) **EP 1 544 003 B1**
(45) Veröffentlichungstag und Bekanntmachung des Hinweises auf die Patenterteilung: **08.11.2006**
(21) Anmeldenummer: 04030203.6
(22) Anmeldetag: 20.12.2004
(51) Int. Cl.: B60D 1/54, B60D 1/06

(54) **Anhängekupplung für Personenkraftfahrzeuge**
Trailer hitch for motor vehicles
Dispositif d'attelage pour véhicules automobiles

(30) Priorität: 20.12.2003 DE 10360245
(43) Veröffentlichungstag der Anmeldung: 22.06.2005
(73) Patentinhaber: Westfalia-Automotive GmbH & Co. KG, 33378 Rheda-Wiedenbrück (DE)
(72) Erfinder: Hermbusch, Gerhard, 33449 Langenberg (DE); Weniger, Burkhard, 59514 Welver (DE)
(74) Vertreter: Elbertzhagen, Otto

(56) Entgegenhaltungen:
- EP-A- 1 024 036
- WO-A-03/072375
- DE-A1- 10 023 640

## Beschreibung

Die Erfindung bezieht sich auf eine Anhängekupplung gemäß dem Oberbegriff des Patentanspruchs 1.

Eine solche Anhängekupplung ist aus dem Dokument DE 100 23 640 A1 bekannt. Die Verschwenkung des den Lagerzapfen der Kugelstange aufnehmenden Gehäuses einerseits und des Lagerzapfens mit der Kugelstange andererseits erfolgt bei der bekannten Ausführung mittels eines exzentrisch am Lagerzapfen angreifenden Antriebsgehäuses, aus dem eine Gewindespindel herausgeführt ist. Diese Gewindespindel ist in Drehrichtung lose und in Axialrichtung fest im Antriebsgehäuse gelagert und durch eine fahrzeugfest anzuordnende Spindelmutter hindurchgeführt. Beim Drehantrieb der Gewindespindel erfolgt je nach Drehrichtung eine Verschiebung des Antriebsgehäuses hin zu einem die Schwenkbewegung des den Lagerzapfen der Kugelstange aufnehmenden Gehäuses begrenzenden Anschlag oder von diesem weg, wodurch die Schwenkbewegung des Gehäuses veranlaßt wird. Bei Anlage des Gehäuses an dem erwähnten Anschlag wird die translatorische Bewegung des Antriebsgehäuses in eine Drehung des Lagerzapfens und damit in die Schwenkung der Kugelstange umgesetzt.

Ein gattungsgemässe Anhängekupplung ist in der Dokument WO 03/072 375 A1 offenbart.

Zwar benötigt man bei der bekannten Anhängekupplung nur einen einzigen Drehantrieb für die Gewindespindel, der fahrzeugfest angeordnet und dementsprechend an die axiale Verschiebung der Gewindespindel angepaßt sein muß. Die Erzielung einer ausreichenden Selbsthemmung der Gewindespindel ist allerdings problematisch, denn über die Gewindespindel muß sich die Kugelstange in der Betriebsstellung gegen daran in der Schwenkrichtung angreifende Kräfte abstützen.

Der Erfindung liegt die Aufgabe zugrunde, eine Anhängekupplung zu schaffen, die ebenfalls nur mit einem einzigen, drehrichtungsumkehrbaren Antrieb auskommt, welcher jedoch von den auf die Kugelstange in der Betriebslage einwirkenden Kräften besser entlastet ist und eine kompaktere Bauform ermöglicht.

Diese Aufgabe wird bei einer Anhängekupplung der eingangs genannten Art durch die kennzeichnenden Merkmale des Anspruchs 1 gelöst.

Für die erfindungsgemäße Anhängekupplung ist wesentlich, daß die zwei Schneckengetriebe, die eine gemeinsame Schneckenwelle aufweisen, eine nicht überwindbare Selbsthemmung haben, wodurch sich die Kugelstange in jeder Lage nicht selbsttätig bewegen kann. Die beiden Schneckenräder der Schneckengetriebe sind mit winklig zueinander stehenden Achsen in unmittelbarer Nachbarschaft aneinander vorbeiführend angeordnet, wobei die einzige Schneckenwelle tangential sowohl zu dem ersten als auch zu dem zweiten Schneckenrad sich erstreckt. Dies ermöglicht eine besonders kompakte Bauform des gesamten, zweifachen Schwenkantriebs, der sowohl die Schwenkung der Kugelstange als auch die Schwenkung des den Lagerzapfen der Kugelstange aufnehmenden Gehäuses zu bewirken hat.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: die auf die Einbaulage bezogene Rückansicht einer Anhängekupplung bei in der Betriebslage befindlicher Kugelstange,
- Fig. 2: die Draufsicht auf die Anhängekupplung nach Fig. 1,
- Fig. 3: die Seitansicht der Anhängekupplung nach den Figuren 1 und 2,
- Fig. 4: die Rückansicht der Anhängekupplung nach den vorangehenden Figuren jedoch in der Ruhestellung der Kugelstange,
- Fig. 5: die Draufsicht auf die Anhängekupplung in der Position gemäß Fig. 4,
- Fig. 6: die Seitansicht der Anhängekupplung in der Position der Figuren 4 und 5,
- Fig. 7: eine perspektivische Rückansicht der Anhängekupplung gemäß den vorangehenden Figuren teilweise in Schnittdarstellung und
- Fig. 8: eine perspektivische Wiedergabe der Anhängekupplung gemäß den Figuren 1 - 7 in gesprengter Darstellung.

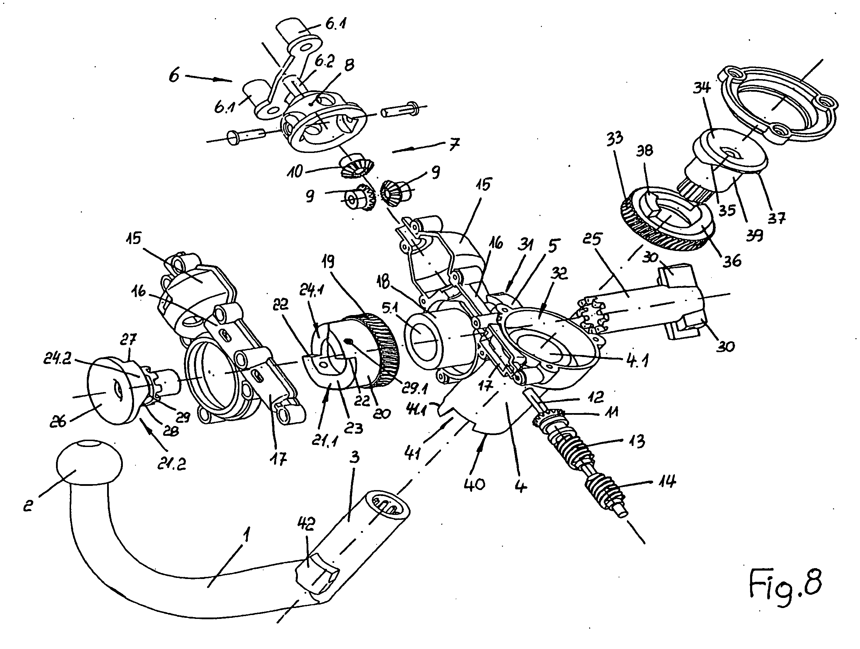

Im einzelnen erkennt man in den Figuren eine Kugelstange 1, die an ihrem einen freien Ende eine Kupplungskugel 2 trägt. An ihrem zweiten Ende weist die Kugelstange 1 einen abgewinkelten, geradlinig sich erstreckenden Lagerzapfen 3 auf. Dieser Lagerzapfen 3 ist in einem Gehäuse 4 aufgenommen, welches, wie Fig. 8 zeigt, eine zylindrische Durchgangsbohrung 4.1 hat. Darin ist der ebenfalls zylindrisch ausgebildete Lagerzapfen 3 um einen begrenzten Winkel drehbar gelagert. Infolgedessen kann die Kugelstange 1 von einer Ruhestellung in eine Betriebslage bzw. umgekehrt verschwenkt werden, je nach Ausführung des Fahrzeugs, für welches die Anhängekupplung bestimmt ist, kann der Schwenkwinkel zwischen 90° und 120° betragen.

Fest mit dem Gehäuse 4 verbunden, gegebenenfalls damit einstückig ausgeführt, ist ein Lagerkörper 5, der ebenfalls eine hohlzylindrische, in Fig. 8 erkennbare Durchgangsbohrung 5.1 aufweist. Um die Achse dieser Bohrung 5.1 ist nicht nur der Lagerkörper 5 sondern die gesamte Anhängekupplung schwenkbar, der begrenzte Schwenkwinkel liegt hier in der Größenordnung von 50°, was ebenfalls von den Einbaubedingungen der Anhängekupplung an dem betreffenden Fahrzeug abhängt. In der Einbaulage an dem jeweiligen Fahrzeug wird die Zylinderachse des Lagerkörpers 5 in der Fahrzeuglängsachse angeordnet.

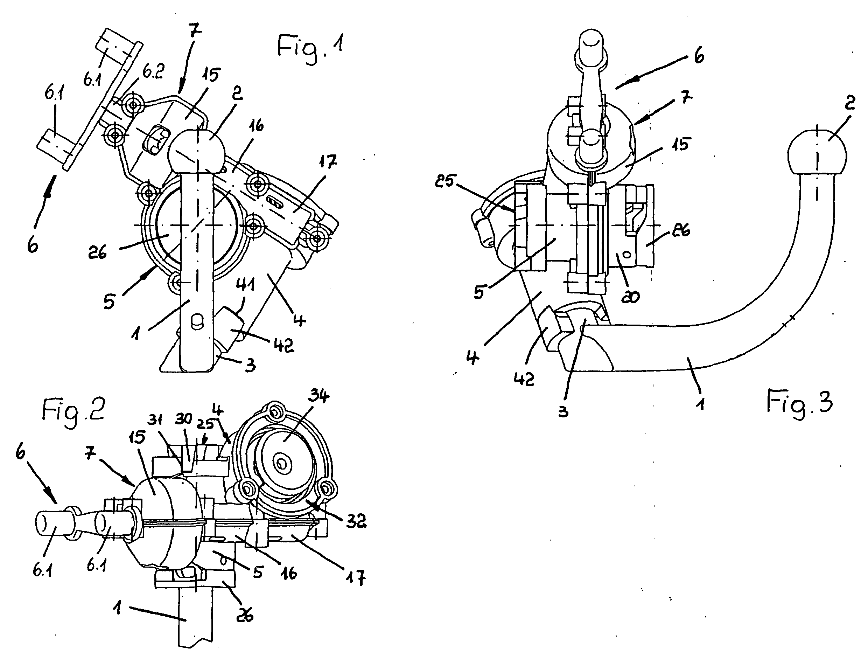

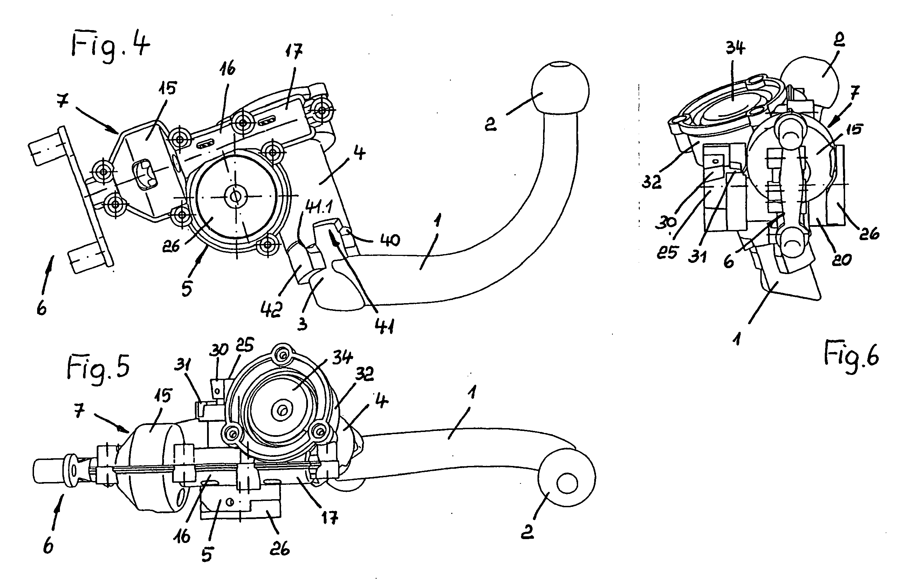

Welchen Schwenkwinkel die gesamte Anhängekupplung beim Verschwenken über den Lagerkörper 5 durchfährt, erkennt man besonders gut beim Vergleich der Darstellungen von Fig. 1 und Fig. 4. Ebenso ergibt sich der Schwenkwinkel der Kugelstange 1 bei Drehung gegenüber dem Gehäuse 4 aus den Darstellungen von Fig. 2 und Fig. 5.

Beim Einfahren von der Betriebslage in die Ruhestellung wird zunächst die Kugelstange 1 entriegelt, was nachstehend noch näher beschrieben werden wird. Danach verschwenkt als erstes die Kugelstange, bevor die Schwenkung der gesamten Anhängevorrichtung erfolgt, wozu zuvor der Lagerkörper 5 entriegelt werden muß, was nachstehend ebenfalls erörtert werden wird. In umgekehrter Bewegungsrichtung erfolgt zuerst der Schwenk der gesamten Anhängevorrichtung durch Drehung des Lagerkörpers 5 und danach dessen Verriegelung in der Betriebslage, anschließend wird die Kugelstange 1 verschwenkt und verriegelt. Der entsprechende Antrieb sorgt dafür, daß die Schwenkung der gesamten Anhängevorrichtung und die Schwenkung der Kugelstange 1 nicht gleichzeitig sondern nacheinander erfolgen.

Die zweifache Schwenkung zum einen durch Drehung des Lagerkörpers 5 und zum anderen durch Verdrehen des Lagerzapfens 3 der Kugelstange 1 erfolgt durch einen einzigen Drehantrieb 6, der sinnbildlich in der Zeichnung durch Drehkurbeln 6.1 wiedergegeben ist. Über diese Drehkurbeln 6.1 wird eine Eingangswelle 6.2 eines Differentialsgetriebes 7 angetrieben, und zwar in der einen Drehrichtung für das Einfahren der Kugelstange 1 von ihrer Betriebslage in die Ruhestellung und in der anderen Drehrichtung für das Ausfahren der Kugelstange 1 von ihrer Ruhestellung in die Betriebslage.

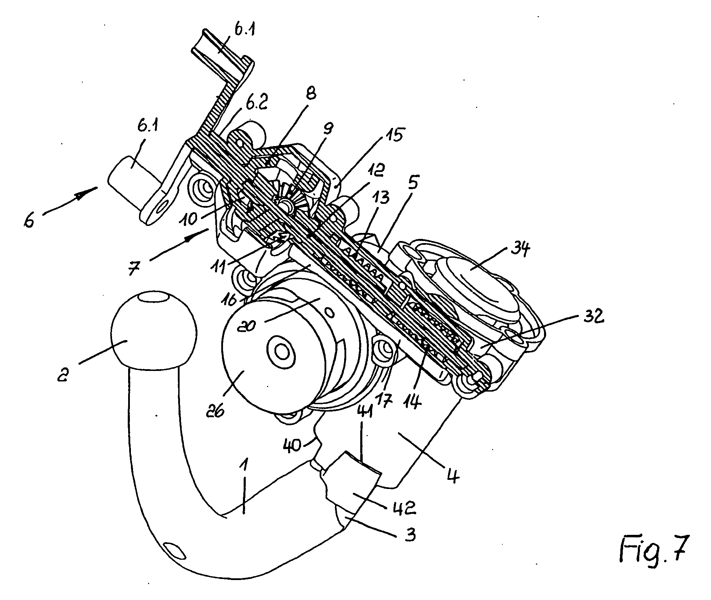

Die Einzelheiten des Differentialgetriebes 7 ergeben sich aus den Figuren 7 und 8. Das Differentialgetriebe 7 weist einen von der Eingangswelle 6.2 angetriebenen Käfig 8 auf, in welchem Planetenräder 9 gelagert sind. Die Planetenräder 9 kämmen mit einem ersten Kegelrad 10 und einem zweiten Kegelrad 11, die beide auf einer Schneckenwelle 12 angeordnet sind. Hierbei ist das erste Kegelrad 10 fest mit der Schneckenwelle 12 verbunden, während das zweite Kegelrad 11 lose auf der Schneckenwelle 12 gelagert ist und sich infolgedessen relativ zur Schneckenwelle 12 drehen kann. Das lose Kegelrad 11 ist fest mit einer ersten Schnecke 13 verbunden, die entsprechend ebenfalls lose auf der Schneckenwelle 12 sitzt. An der vom Differentialgetriebe 7 abliegenden Ende sitzt auf der Schneckenwelle 12 fest eine zweite Schnecke 14, welche folglich die Drehbewegungen der Schneckenwelle 12 mitmacht.

Das Differentialgetriebe 7 ist in einem Gehäuse 15 angeordnet, und daran schließen sich in axialer Richtung Gehäuseteile 16 und 17 für die beiden Schnecken 13 und 14 an. Das Gehäuse 15 und die Gehäuseteile 16 und 17 sind in Richtung einer Diametralebene der Schneckenwelle 12 teilbar und in montierter Anordnung fest mit dem Lagerkörper 5 verbunden. Für die Lagerung der Schneckenwelle 12 sind im Gehäuse 15 sowie in den Gehäuseteilen 16 und 17 entsprechende Lager vorgesehen, die in der Zeichnung nicht näher dargestellt sind.

Der Lagerkörper 5 hat an seinem einen Ende axial vorstehend eine Aufnahme 18, auf der ein erstes Schneckenrad 19 fest aufgenommen ist. Mit diesem Schneckenrad 19 kämmt die erste, lose auf der Schneckenwelle 12 gelagerte Schnecke 13, bei deren Drehung entsprechend der Lagerkörper 5 mitsamt dem Gehäuse 4 und den weiteren Teilen der Anhängekupplung um die durch die Bohrung 5.1 hindurchgehende Achse geschwenkt wird. An dem Schneckenrad 19 findet sich ein axialer Ansatz 20, der an seiner freien Stirnseite mit einer Klauenkontur 21.1 versehen ist. Diese Klauenkontur 21.1 weist in der Drehrichtung wirksame Anschläge 22 für eine Drehmitnahme sowie eine axial ansteigende Kurve 23 für eine Verschiebung des Lagerkörpers 5 auf.

Die Klauenkontur 21.1 am Ansatz 20 des ersten Schneckenrades 19 wirkt mit einer Klauenkontur 21.2 zusammen, die sich an einem Klauenkupplungsteil 26 befindet, welches axial gegenüberliegend zum Ansatz 20 am ersten Schneckenrad 19 angeordnet ist. So weist auch die Klauenkontur 21.2 des Klauenkupplungsteils 26 Anschläge 27 und eine axial ansteigende Kurve 28 für die Verdrehung und Verschiebung des Lagerkörpers 5 auf. Anstelle oder in Ergänzung der axial ansteigenden Kurven 23 und 28 der Klauenkonturen 21.1 und 21.2 kann in einem axialen Ansatz des Klauenkupplungsteils 26 auch eine Kulisse 29 vorgesehen sein, welche eine dem Verschiebehub des Lagerkörpers 5 entsprechende Steigung in axialer Richtung aufweist. In diese Kulisse 29 greift ein Führungsstift 29.1 ein, der im Ansatz 20 am ersten Schneckenrad 19 in radialer Richtung angeordnet ist. Es können auch zwei oder mehrere der Kulissen 29 und der Stifte 29.1 vorgesehen werden.

In montierter Anordnung ist das Klauenkupplungsteil 26 drehfest an ein Achsteil 25 angesetzt, auf welchem der Lagerkörper 5 schwenkbar gelagert ist. Dementsprechend tritt das Achsteil 25 durch die Durchgangsbohrung 5.1 des Lagerkörpers 5 hindurch. Das Achsteil 25 ist dasjenige Bauteil, über welches die gesamte Anhängekupplung an dem betreffenden Fahrzeug gehalten ist, und dementsprechend wird das Achsteil 25 vorzugsweise in der Längsachse des jeweiligen Fahrzeugs angeordnet.

Die Anschläge 22 und 27 der Klauenkonturen 21.1 und 21.2 sorgen dafür, daß der Lagerkörper 5 jeweils nur um den vorerwähnten begrenzten Schwenkwinkel auf dem Achsteil 25 drehbar ist. Über die aneinander anliegenden ansteigenden Kurven 23 und 24 der Klauenkonturen 21.1 und 21.2 kann der Lagerkörper 5 in Richtung seiner Schwenkachse auf dem Achsteil 25 verschoben werden. Dies geschieht in der Betriebslage der Kugelstange 1 zu Beginn der Einfahrbewegung in der einen Verschieberichtung und am Ende der Schwenkbewegung des Lagerkörpers 5 beim Ausfahren der Kugelstange 1 in der anderen Verschieberichtung. Dadurch wird eine Verriegelung des Lagerkörpers 5 in der Betriebslage der Kugelstange 1 bewirkt. Hierzu sind am Achsteil 25 radial vorstehende Formschlußglieder 30 nach Art von achsparallel sich erstreckenden Nutensteinen vorgesehen, die mit Formschlußelementen 31 in Gestalt von achsparallelen, endseitig offenen Schlitzen oder Nuten an der Stirnseite des Lagerkörpers 5 zusammenwirken, mit denen sich der Lagerkörper 5 auf die Formschlußelemente 31 aufschieben kann, vergleiche hierzu insbesondere Fig. 2 und 6. Es versteht sich, daß während der axialen Verschiebung der Lagerkörper 5 sich nicht auf dem Achsteil 25 drehen kann, dazu sind die Klauenkonturen 21.1 und 21.2 am Ansatz 20 des ersten Schneckenrades 19 und am Klauenkupplungsteil 26 entsprechend ausgeführt. Die entgegen den axial ansteigenden Kurven 23 und 28 der Klauenkonturen 21.1 und 21.2 wirkenden Verschiebekräfte werden durch eine Druckfeder aufgebracht, die in der Zeichnung nicht dargestellt ist.

Das Gehäuse 4 zur Aufnahme des Lagerzapfens 3 an der Kugelstange 1 weist an dem von der Kugelstange 1 abliegenden Ende einen erweiterten Gehäuseabschnitt 32 auf, in welchem ein zweites Schneckenrad 33 angeordnet ist, welches mit dem zweiten, fest auf der Schneckenwelle 12 angeordneten Schneckenrad 14 in Eingriff steht. Wie Fig. 8 weiter veranschaulicht, ist das zweite Schneckenrad 33 auf einem Achskörper 39 gelagert, an dem endseitig ein radial vorstehender Kupplungsflansch 34 sich befindet.

In montierter Anordnung sitzt der Achskörper 39 koaxial fest am Lagerzapfen 3 der Kugelstange 1 und kann mit dieser nicht nur gedreht sondern auch in axialer Richtung des Lagerzapfens 3 verschoben werden. Dies geschieht beim Einfahren der Kugelstange 1 aus der Betriebslage heraus zu Beginn der Einfahrbewegung und ebenfalls beim Erreichen der ausgeschwenkten Endlage zur Erlangung der verriegelten Betriebslage in entgegengesetzter Verschieberichtung. Dazu sind an der einen Stirnseite des zweiten Schneckenrades 33 und am Kupplungsflansch 34 zusammenwirkende Anschläge 37 und 38 vorgesehen, welche in den beiden Drehrichtungen die Drehmitnahme bewirken. Des weiteren finden sich zwischen den Anschlägen 37 und 38 axial ansteigende Steuerkurven 36 und 35 an der Stirnseite des zweiten Schneckenrades 33 und an der gegenüberliegenden Stirnseite des Kupplungsflansches 34, die in axialer Richtung eine Steigung aufweisen und aneinander anliegen, wodurch der Verschiebehub des Kupplungsflansches mit dem Lagerzapfen 3 vorgegeben ist. Auch hier wirken das Schneckenrad 33 und der Kupplungsflansch 34 derart zusammen, daß während der axialen Verschiebung des Kupplungsflansches 34 eine Drehmitnahme nicht erfolgen kann, andererseits jedoch der Lagerzapfen 3 während der Drehung nicht durch seine Verriegelung blockiert ist. Um den Lagerzapfen 3 gegen Verdrehung sichern und damit die Kugelstange 1 in der Betriebslage verriegeln zu können, ist an der Stirnseite 40 des Gehäuses 4, an welcher der Lagerzapfen 3 austritt, ein erstes Formschlußteil 41 in Gestalt einer Aussparung vorgesehen. Am Umfang des Lagerzapfens 3 befindet sich ein entsprechendes Formschlußteil 42 in Gestalt eines Nockens, der bei Ausrichtung in Umfangsrichtung auf das Formschlußteil 41 am Gehäuse 4 darin eintauchen kann. Diese Verriegelungslage zeigen insbesondere die Figuren 1 und 7. Wie aus Fig. 4 hervorgeht, kann an der Stirnseite 40 des Gehäuses 4 noch ein Anschlag 41.1 vorgesehen sein, um in der Ruhestellung der Kugelstange 1 den Lagerzapfen 3 am Gehäuse 4 in eine vorbestimmte Endlage bringen zu können.

Beim Einfahren der Kugelstange 1 von der Betriebslage in die Ruhestellung haben das Differentialgetriebe 7 und die Schneckengetriebe 13, 19 sowie 14, 33 folgende Funktion: Da der Lagerkörper 5 über die Blockiereinrichtung 30, 31 zunächst noch festgehalten wird, wird über das Differentialgetriebe 7 zunächst die Schneckenwelle 12 gedreht, die über die damit feste Schnecke 14 das Schneckenrad 33 antreibt. Dadurch wird zunächst der Lagerzapfen 3 mitsamt der Kugelstange 1 verschoben und zwar solange, bis deren Verriegelungseinrichtung 41, 42 die Verschwenkung der Kugelstange 1 freigibt. Ist diese Schwenkbewegung beendet und gegebenenfalls die Kugelstange 1 am Anschlag 41.1 in der eingeschwenkten Endstellung gesichert, kann über das Differentialgetriebe 7 nur noch die in Eingriff mit dem ersten Schneckenrad 19 stehende Schnecke 13 angetrieben werden, wozu zunächst die Verschiebung des Lagerkörpers 5 bewirkt wird, um ihn aus der Verriegelung durch die Blockiereinrichtung 30, 31 freizugeben. Danach folgt die Verschwenkung des Lagerkörpers 5 zusammen mit der gesamten Anhängevorrichtung. Dies alles geschieht in derselben Drehrichtung der das Differentialgetriebe 7 antreibenden Eingangswelle 6.2.

Zum Ausfahren der Kugelstange 1 von ihrer Ruhestellung in die Betriebslage wird in der umgekehrten Drehrichtung der Eingangswelle 6.2 zunächst über die lose auf der Schneckenwelle 12 sitzende Schnecke 13 das erste Schneckenrad 19 angetrieben und dementsprechend der Lagerkörper 5 als erstes verschwenkt. Ist danach der Lagerkörper 5 axial so verschoben, daß er über die Blockiereinrichtung 30, 31 gegen Verdrehen gesichert ist, kann das Differentialgetriebe 7 nur noch über die fest auf der Schneckenwelle 12 sitzende Schnecke 14 das zweite Schneckenrad 3 antreiben und zunächst die Verschwenkung des mit der Kugelstange 1 festen Lagerzapfens 3 bewirken, um danach durch Verschieben des Lagerzapfens 3 die Verriegelung der Kugelstange 1 über die Verriegelungseinrichtung 40, 42 vorzunehmen.

## Patentansprüche

1. Anhängekupplung für Personenkraftfahrzeuge mit einer eine Kupplungskugel (2) an ihrem freien Ende tragenden Kugelstange (1), die an ihrem zweiten Ende einen abgewinkelten, in einem Gehäuse (4) um seine Achse um etwa 90° drehbar aufgenommenen Lagerzapfen (3) aufweist, mittels dem sie zwischen einer Ruhestellung und einer Betriebslage schwenkbar ist, wobei ferner das Gehäuse (4)um eine fahrzeugfeste, winklig zur Drehachse des Lagerzapfens (3) stehende Achse ebenfalls schwenkbar ist, wozu seitlich am Gehäuse (4) ein damit fester Lagerkörper (5) angeordnet ist,
**dadurch gekennzeichnet,**
**daß** für den Schwenkantrieb des Gehäuses (4) an dem damit festen Lagerkörper (5) ein erstes, fahrzeugfest feststellbares Schneckenrad (19) und für den Schwenkantrieb des mit der Kugelstanges (1) festen Lagerzapfens (3) im Gehäuse (4) ein zweites Schneckenrad (33) gelagert ist und ferner tangential zu beiden Schneckenrädern (19, 33) eine Schneckenwelle (12) sich erstreckt, auf der eine erste, mit dem ersten Schneckenrad (19) in Eingriff stehende sowie am Lagerkörper (5) abgestützte Schnecke (13) und eine zweite, mit dem zweiten Schneckenrad (33) im Gehäuse (4) in Eingriff stehende Schnecke (14) sich befinden, von denen die eine drehfest mit der Schneckenwelle (12) und die andere darauf lose gelagert ist, und daß die Schneckenwelle (12) mittels des Käfigs (8) eines Differentialgetriebes (7) mit einem Drehantrieb (6) kuppelbar ist, wobei dieser Käfig (8) zumindest ein Planetenrad (9) aufweist, das zum einen mit einem auf der Schneckenwelle (12) drehfest angeordneten Kegelrad (10) und zum anderen mit einem Kegelrad (11) kämmt, welches lose auf der Schneckenwelle (12) gelagert und drehfest mit der auf der Schneckenwelle (12) lose gelagerten Schnecke (13) ist.

2. Anhängekupplung nach Anspruch 1,
**dadurch gekennzeichnet,**
**daß** der mit der Kugelstange (1) feste Lagerzapfen (3) relativ zum Gehäuse (4) und der mit dem Gehäuse (4) feste Lagerkörper (5) relativ zur fahrzeugfesten Achse mit solchen überwindbaren Drehhemmungen ausgestattet sind, daß die Schwenkung des Gehäuses (4) einerseits und die Drehung des Lagerzapfens (3) andererseits beim Antrieb des Käfigs (8) des Differentialgetriebes (7) in der einen wie in der anderen Drehrichtung nacheinander erfolgen.

3. Anhängekupplung nach Anspruch 1 oder 2,
**dadurch gekennzeichnet,**
**daß** der mit der Kugelstange (1) feste Lagerzapfen (3) im Gehäuse (4) axial verschieblich gelagert ist und einen radial vorstehenden Kupplungsflansch (34) aufweist, neben dem das zweite Schneckenrad (33) axial fest gelagert ist, wobei dieses Schneckenrad (33) und der Kupplungsflansch (34) aneinander abstützende, in axialer Richtung mit einer Steigung versehene Steuerkurven (35, 36)für eine Verschiebung des Lagerzapfens (3) und Anschläge (37, 38) für eine Drehmitnahme des Lagerzapfens (3) aufweisen.

4. Anhängekupplung nach Anspruch 3,
**dadurch gekennzeichnet,**
**daß** der Kupplungsflansch (34) Teil eines koaxial an den Lagerzapfen (3) der Kugelstange (1) fest angesetzten Achskörpers (39) ist.

5. Anhängekupplung nach Anspruch 3 oder 4,
**dadurch gekennzeichnet,**
**daß** an der Stirnseite (40) des Gehäuses (4), aus welcher der Lagerzapfen (3) der Kugelstange (1) austritt, ein erstes Formschlußteil (41) und am Umfang des Lagerzapfens (3) wenigstens ein zweites Formschlußteil (42) angeordnet ist, wobei die axiale Verschiebung des Lagerzapfens (3) derart gesteuert ist, daß zumindest in der Betriebslage der Kugelstange (1) die Formschlußteile (41, 42) miteinander zwecks Verriegelung der Kugelstange (1) in Eingriff stehen.

6. Anhängekupplung nach einem der Ansprüche 1 - 5,
**dadurch gekennzeichnet,**
**daß** der mit dem Gehäuse (4) feste Lagerkörper (5) als Hülse ausgebildet ist und auf einem fahrzeugfest anzuordnenden Achsteil (25) axial verschieblich gelagert ist, wobei er in der einen axialen Endlage mit dem Achsteil (25) drehfest gekuppelt und in der zweiten axialen Endlage auf dem Achsteil (25) um dessen Achse um einen begrenzten Winkel schwenkbar gelagert ist.

7. Anhängekupplung nach Anspruch 6,
**dadurch gekennzeichnet,**
**daß** der Lagerkörper (5) am Umfang eine Aufnahme (18) für das erste Schneckenrad (19) hat, welches im Bereich dieser Aufnahme (18) mit dem Lagerkörper (5) fest verbunden ist.

8. Anhängekupplung nach Anspruch 7,
**dadurch gekennzeichnet,**
**daß** das erste Schneckenrad (19) an seiner einen Stirnseite eine Klauenkontur (21.1) hat und dem ersten Schneckenrad (19) axial benachbart ein Klauenkupplungsteil (26) mit einer ent-sprechenden Klauenkontur (21.2) angeordnet ist, welches mit dem fahrzeugfest anzuordnenden Achsteil (25) fest verbunden ist, wobei die Klauenkonturen (21.1, 21.2) für die eine Drehrichtung das erste Schneckenrad (19) blockierende Anschläge (22, 27) und für die zweite Drehrichtung dieses Schneckenrad (19) mitsamt dem Lagerkörper (5) und dem Gehäuse (4) verschiebende, axial steigende Kurven (23, 28) aufweisen, wobei am Achsteil (25) Formschlußglieder (30) und am Lagerkörper (5) damit zusammenwirkende Formschlußelemente (31) angeordnet sind, die in der verschobenen Endlage des Lagerkörpers (5) miteinander in Eingriff stehen.

9. Anhängekupplung nach Anspruch 8,
**dadurch gekennzeichnet,**
**daß** anstelle oder in Ergänzung der steigenden Kurven (23, 38) der Klauenkonturen (21.1, 21.2) am Kupplungsteil (26) eine Kulisse (29) mit gleicher axialer Steigung und am ersten Schneckenrad (19) fest ein darin radial eingreifender Führungsstift (29.1) angeordnet ist.

10. Anhängekupplung nach einem der Ansprüche 1 - 9,
**dadurch gekennzeichnet,**
**daß** für das Einfahren der Kugelstange (1) von der Betriebslage in die Ruhestellung das Entriegeln sowie das Verschwenken der Kugelstange (1) über den Lagerzapfen (3) relativ zum Gehäuse (4) vorrangig vor dem Entriegeln und Verschwenken des Gehäuses (4) um das fahrzeugfeste Achsteil (25) ist, wobei beim Ausfahren der Kugelstange (1) von der Ruhestellung in die Betriebslage das Verschwenken und Verriegeln des Gehäuses (4) an der fahrzeugfesten Achse vorrangig vor dem Verschwenken und Verriegeln der Kugelstange (1) über den Lagerzapfen (3) an dem Gehäuse (4) ist.

11. Anhängekupplung nach einem der Ansprüche 1 - 10,
**dadurch gekennzeichnet,**
**daß** in der Einbaulage das fahrzeugfeste Achsteil (25), um welche das Gehäuse (4) mit dem Lagerkörper (5) schwenkbar ist, in der Fahrzeuglängsachse liegt und die Drehachse des Lagerzapfens (3) der Kugelstange (1) zur Fahrzeuglängsachse und zur Fahrzeugquerachse geneigt verläuft.

## Claims

1. Trailer hitch for motor vehicles with a ball stem (1) which supports a coupling ball (2) at its free end and which at its second end has an angled bearing gudgeon (3) which is positioned rotatable about 90° about its axis in a housing (4) and by means of which the stem can be pivoted between a rest position and an operating position, wherein furthermore the housing (4) is likewise able to pivot about an axis which is fixed relative to the vehicle and which stands at an angle to the rotational axis of the bearing gudgeon (3), for which a bearing body (5) is mounted at the side on the housing (4) and is secured therewith,
**characterised in that**
for the pivotal drive of the housing (4) on the secured bearing body (5) there is a first worm wheel (19) which can be positioned secured on the vehicle, and for the pivotal drive of the bearing gudgeon (3) which is secured with the ball stem (1) in the housing (4) there is a second worm wheel (33) and furthermore tangentially to the two worm wheels (19, 33) a worm shaft (12) extends on which is located a first worm (13) which engages with the first worm wheel (19) and is supported on the bearing body (5), and also a second worm (14) which engages with the second worm wheel (33) in the housing (4) whereby one of the worms is mounted rotationally secured with the worm shaft (12) and the other is mounted loose thereon, and that the worm shaft (12) can be coupled to a rotational drive (6) by means of the cage (8) of a differential gearing (7), whereby this cage (8) has at least one planetary wheel (9) which on the one hand meshes with a bevel gear (10) mounted rotationally secured on the worm shaft (12) and on the other meshes with a bevel gear (11) which is mounted loosely on the worm shaft (12) and is rotationally secured with the worm (13) which is mounted loosely on the worm shaft (12).

2. Trailer hitch according to claim 1,
**characterised in that**
the bearing gudgeon (3) which is fixed with the ball stem (1) relative to the housing (4) and the bearing body (5) which is fixed with the housing (4) relative to the axis secured on the vehicle are equipped with rotary locks designed to be overcome such that with the drive of the cage (8) of the differential gearing (7) pivoting the housing (4) on the one side and rotating the bearing gudgeon (3) on the other side take place successively in one and then in the other rotational direction.

3. Trailer hitch according to claim 1 or 2,
**characterised in that**
the bearing gudgeon (3) fixed with the ball stem (1) is mounted axially displaceable in the housing (4) and has a radially protruding coupling flange (34) next to which the second worm wheel (33) is mounted axially secured, whereby this worm wheel (33) and the coupling flange (34) have control curves (35, 36) which are supported against one another and which are provided in the axial direction with a pitch for displacement of the bearing gudgeon (3) and stops (37, 38) for rotational entrainment of the bearing gudgeon(3).

4. Trailer hitch according to claim 3,
**characterised in that**
the coupling flange (34) is part of an axial body (39) set fixed and coaxial on the bearing gudgeon (3) of the ball stem (1).

5. Trailer hitch according to claim 3 or 4,
**characterised in that**
on the end side (40) of the housing (4) from which the bearing gudgeon (3) of the ball stem (1) emerges there is a first positive locking part (41) and on the periphery of the bearing gudgeon (3) there is at least a second positive locking part (42) whereby the axial displacement of the bearing gudgeon(3) is controlled so that at least in the operating position of the coupling rod (1) the positive locking parts (41, 42) engage with one another for the purpose of locking the ball stem (1).

6. Trailer hitch according to one of claims 1 to 5,
**characterised in that**
the bearing body (5) which is fixed with the housing (4) is designed as a sleeve and is mounted axially displaceable on an axle part (25) which is to be mounted secured on the vehicle, whereby in the one axial end position it is coupled rotationally secured to the axle part (25) and in the second axial end position it is mounted on the axle part (25) to pivot a restricted angle about its axis.

7. Trailer hitch according to claim 6,
**characterised in that**
the bearing body (5) has on the periphery a socket (18) for the first worm wheel (19) which is fixedly connected in the region of this socket (18) to the bearing body (5).

8. Trailer hitch according to claim 7,
**characterised in that**
the first worm wheel (19) has on its one end side a claw contour (21.1) and axially adjoining the first worm wheel (19) there is a claw coupling part (26) with a corresponding claw contour (21.2) which is fixedly connected to the axle part (25) which is to be mounted secured on the vehicle, whereby the claw contours (21.1, 21.2) for the one rotational direction have stops (22, 27) blocking the first worm wheel (19) and for the second rotational direction have axially rising curves (23, 28) which move this worm wheel (19) together with the bearing body (5) and the housing (4) whereby on the axle part (25) there are positive locking members (30) and on the bearing body (5) there are positive locking elements (31) interacting therewith which engage with one another in the displaced end position of the bearing body (5).

9. Trailer hitch according to claim 8,
**characterised in that**
instead of or in addition to the rising curves (23, 38) of the claw contours (21.1, 21.2) on the coupling part (26) there is a sliding guide (29) with the same axial pitch and on the first worm wheel (19) there is a fixed guide pin (29.1) engaging radially therein.

10. Trailer hitch according to one of claims 1 to 9,
**characterised in that**
for moving the ball stem (1) from the operating position into the rest position unlocking as well as pivoting the ball stem (1) over the bearing gudgeon (3) relative to the housing (4) takes place before the unlocking and pivoting of the housing (4) about the axle part (25) fixed on the vehicle, whereby as the ball stem (1) extends from the rest position into the operating position the pivoting and locking of the housing (4) on the axis fixed on the vehicle takes precedence before the pivoting and locking of the ball stem (1) over the bearing gudgeon (3) on the housing (4).

11. Trailer hitch according to one of claims 1 to 10,
**characterised in that**
in the installation position the axle part (25) which is fixed on the vehicle and about which the housing (4) can pivot with the bearing body (5), lies in the longitudinal axis of the vehicle and the rotational axis of the bearing gudgeon(3) of the ball stem (1) runs inclined to the longitudinal axis of the vehicle and to the transverse axis of the vehicle.

## Revendications

1. Dispositif d'attelage pour voitures particulières avec une barre d'attelage à rotule (1) qui, portant, à son extrémité libre, une rotule d'attelage (2), présente, à sa deuxième extrémité, un tourillon (3) pivotant d'environ 90° autour de son axe et logé dans un boitier (4), au moyen duquel elle peut être pivotée entre une position inactive et une position de service, le boitier (4) pouvant en outre pivoter également autour d'un axe solidaire du véhicule automobile qui forme un angle par rapport à l'axe de rotation du tourillon (3), un palier (5) y associé étant agencé latéralement au boitier (4),
**caractérisé en ce que**,
pour l'entraînement à pivotement du boitier (4), une première roue hélicoïdale (19) ajustable, fixée au véhicule automobile, est agencée au palier (5) associé, et que, pour l'entraînement à pivotement du tourillon (3) solidaire de la barre d'attelage à rotule (1), une deuxième roue hélicoïdale (33) est montée dans le boitier (4), et que, de plus, s'étend tangentiellement aux deux roues hélicoïdales (19, 33), un arbre hélicoïdal (12), sur lequel se trouvent une première vis sans fin (13) coopérant avec la première roue hélicoïdale (19) et prenant appui sur le palier (5), et une deuxième vis sans fin (14) coopérant avec la deuxième roue hélicoïdale (33) dans le boitier (4), dont l'une est solidaire en rotation avec l'arbre hélicoïdal (12) et dont l'autre est montée libre sur celui-ci, et **en ce que** l'arbre hélicoïdal (12) peut être couplé avec un entraînement en rotation(6) au moyen de la cage (8) d'un différentiel (7), cette cage (6) présentant au moins une roue planétaire (9) qui, d'une part, coopère avec une roue conique (10), agencée solidaire en rotation sur l'arbre hélicoïdal (12), et, d'autre part, avec une roue conique (11) qui est montée librement sur l'arbre hélicoïdal (12) et solidaire en rotation avec la vis sans fin (13) montée librement sur l'arbre hélicoïdal (12).

2. Dispositif d'attelage selon la revendication 1,
**caractérisé en ce que**,
le tourillon (3) associé à la barre d'attelage à rotule (1), par rapport au boitier (4), et le palier (5) solidaire du boitier (4), par rapport à l'axe solidaire du véhicule automobile, sont pourvus de tels blocages en rotation insurmontables que le pivotement du boitier (4), d'une part, et la rotation de tourillon (3), d'autre part, s'effectuent successivement dans l'une comme dans l'autre direction, lors de l'entraînement de la cage (8) du différentiel (7).

3. Dispositif d'attelage selon revendication 1 ou 2,
**caractérisé en ce que**
le tourillon (3) solidaire de la barre d'attelage à rotule (1) est monté, axialement mobile, dans le boitier (4), et présente un flasque de couplage (34) en saillie dans la direction radiale, à côté duquel la deuxième roue hélicoïdale (33) est montée, fixe dans la direction axiale, cette roue hélicoïdale (33) et le flasque de couplage (34) présentant (3), des courbes de commande (35, 36) s'appuyant l'une sur l'autre et présentent une rampe dans la direction axiale, pour une translation du tourillon (3), et des butées (37, 38) pour un entraînement en rotation du tourillon (3).

4. Dispositif d'attelage selon la revendication 3,
**caractérisé en ce que**
le flasque de couplage (34) fait partie d'un corps axial (39) fixé coaxialement au tourillon (3) de la barre d'attelage à rotule (1).

5. Dispositif d'attelage selon revendication 3 ou 4,
**caractérisé en ce que**,
sont disposées, sur le côté frontal (40) du boitier (4), par lequel sort le tourillon (3) de la barre d'attelage à rotule (1), une première pièce d'emboîtement (41), et, sur la périphérie du tourillon (3), au moins une deuxième pièce d'emboîtement (42), le déplacement axial du tourillon (3) étant commandé de telle manière que les pièces d'emboîtement (41, 42) sont en prise l'une avec l'autre, au moins quand la barre d'attelage à rotule (1) est en position de service, pour verrouiller la barre d'attelage à rotule (1).

6. Dispositif d'attelage selon l'une des revendications 1 à 5,
**caractérisé en ce que**
le palier (5) solidaire du boitier (4) est conçu en tant que manchon et est monté, mobile, sur un bout d'axe fixé à l'arbre (25) à agencer fixement au véhicule automobile, et qui, dans une position finale, axiale, est couplé solidaire en rotation à l'arbre (25), et, dans la deuxième position finale, axiale, est monté sur l'arbre (25) autour de l'axe duquel il peut être pivoté sur un angle limité.

7. Dispositif d'attelage selon la revendication 6,
**caractérisé en ce que**
le palier (5) présente, sur sa périphérie, un logement (18) pour la première roue hélicoïdale (19) qui est reliée au palier (5) dans la région de ce logement (18).

8. Dispositif d'attelage selon la revendication 7,
**caractérisé en ce que**
la première roue hélicoïdale (19) présente, sur l'une de ses faces frontales un contour de griffe (21.1) et qu'un l'élément de couplage (26) avec un contour de griffe correspondant (21.2), qui est relié fixement à l'arbre (25) à associer au véhicule automobile, avoisine ladite première roue hélicoïdale (19), les contours de griffes (21.1, 21.2) présentent, pour l'une des directions de rotation, des butées (22, 27) qui bloquent la première roue hélicoïdale (19), et, pour la deuxième direction de rotation, des rampes courbes (23. 28) axiales qui décalent cette roue hélicoïdale (19) en commun avec le palier (5) et le boitier (4), sur l'arbre (25) étant agencés des organes d'emboîtement (30) et sur le palier (5) des éléments d'emboîtement (31) correspondant qui entrent en prise les uns avec les autres quand le palier (5) se trouve en position finale, décalée.

9. Dispositif d'attelage selon la revendication 8,
**caractérisé en ce que**,
à la place ou en complément des rampes courbes (23, 38) des contours de griffes (21.1, 21.2) sur l'élément de couplage (26), est prévue une coulisse (29) avec la même rampe axiale, et qu'une tige de guidage (29.1), s'y engageant radialement, est agencée fixement à la première roue hélicoïdale (19).

10. Dispositif d'attelage selon l'une des revendications 1 - 9,
**caractérisé en ce que**,
lors de la rentrée de la barre d'attelage à rotule (1) de la position de service à la position inactive, le déverrouillage ainsi que le pivotement de la barre d'attelage à rotule (1) par l'intermédiaire du tourillon (3), par rapport au boitier (4) prend le pas sur le déverrouillage et le pivotement du boitier (4) autour de l'arbre (25), tandis que, lors du passage de la barre d'attelage à rotule (1) de la position inactive à la position de service, le pivotement et le verrouillage du boitier (4) sur l'axe solidaire du véhicule automobile prend le pas sur le pivotement et le verrouillage de la barre d'attelage à rotule (1) au boitier (4) par l'intermédiaire du tourillon (3).

11. Dispositif d'attelage selon l'une des revendications 1 - 10,
**caractérisé en ce que**.
à l'état monté, l'arbre (25), autour duquel le boitier (4) peut être pivoté avec le palier (5), est orienté selon l'axe longitudinal du véhicule automobile, et que l'axe de rotation du tourillon (3) de la barre d'attelage à rotule (1) suit un plan incliné par rapport à l'axe longitudinal et à l'axe transversal du véhicule automobile.
